# EUROPEAN PATENT SPECIFICATION

(11) **EP 2 543 862 B1**
(45) Date of publication and mention of the grant of the patent: **21.02.2018**
(21) Application number: 12175025.1
(22) Date of filing: 04.07.2012
(51) Int. Cl.: F02K 1/62, F02K 1/64

(54) **Thrust reverser**
Schubumkehrer
Inverseur de poussée

(30) Priority: 08.07.2011 US 201113178990
(43) Date of publication of application: 09.01.2013
(73) Proprietor: United Technologies Corporation, Farmington, CT 06032 (US)
(72) Inventor: Do, Logan H., Canton, CT Connecticut 06019 (US)
(74) Representative: Hughes, Andrea Michelle

(56) References cited:
- US-A- 3 060 685
- US-A- 3 658 279
- US-A- 3 690 561
- US-A- 3 981 463
- US-A- 3 997 134

## Description

### BACKGROUND

This invention relates to internal gas turbine propulsion aircraft and, more particularly, to a thrust reverser for an internal propulsion aircraft.

Military transport aircraft face many difficult challenges to accomplish their missions. Oftentimes, they must land in combat zones where there may be short runways and little ground support equipment available. Therefore, the aircraft must be capable of high deceleration so that it can approach the airstrip at high speed (to reduce exposure to nearby enemy forces) but still land on short runway, all while carrying a heavy load. The aircraft also must be able to taxi in reverse without the assistance of a pushback tractor.

New military transport aircraft also must meet the requirement of having a low radar cross section, which leads to a low observable aircraft that is more difficult to detect using radar. This requirement is satisfied using stealth technology. Part of stealth technology includes using an internal propulsion system that is internal to the wings and/or fuselage and is therefore hidden, concealed, and unexposed.

Modem gas turbine engine aircraft include thrust reversers to slow the aircraft during landing. These thrust reversers typically employ parts of the engine nacelle to direct propulsion gas forward. Because the propulsion systems on stealth aircraft are mounted internally, there is no exterior engine nacelle that can serve as a thrust reverser.

US 3,997,134 and US 3,060,685 teach thrust reversers.

### SUMMARY

According to the present invention, there is provided a thrust reverser assembly for a gas turbine engine as claimed in claim 1.

In another aspect, the invention provides an internal propulsion aircraft as claimed in claim 14.

### BRIEF DESCRIPTION OF THE DRAWINGS

FIG. 1A is a front perspective view of an internal propulsion aircraft having a plurality of thrust reversers, each in the deployed position.
FIG. 1B is a front perspective view of a propulsion system broken out of the internal propulsion aircraft along line 1B in FIG. 1A having the thrust reverser in the deployed position.
FIG. 2 is a front perspective view of two thrust reversers in the deployed position.
FIG. 3A is a cross-section view along line 3-3 in FIG. 2 of a thrust reverser in the stowed position.
FIG. 3B is a cross-section view along line 3-3 in FIG. 2 of a thrust reverser in the deployed position.
FIG. 4A is a side view of an alternate embodiment actuator having a lock lever.
FIG. 4B is a side view of a rotary actuator having a worm gear.

### DETAILED DESCRIPTION

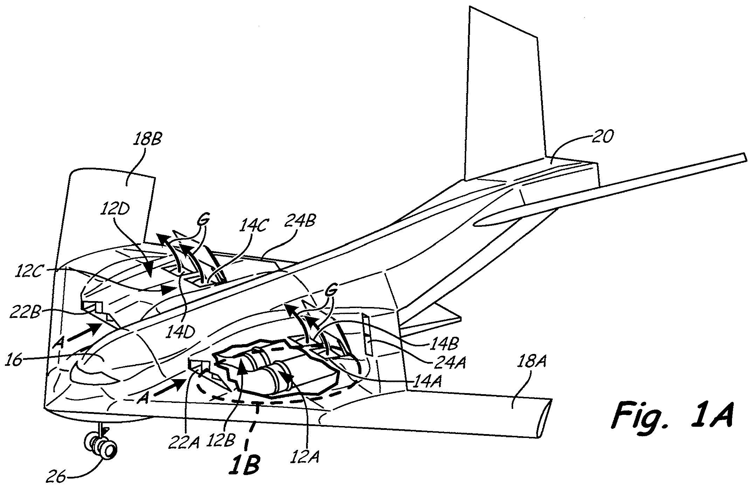

In FIG. 1A, a front perspective view of internal propulsion aircraft 10 having thrust reversers 14A-14D is shown, each in the deployed position. Shown in FIG. 1A are internal propulsion aircraft 10, propulsion systems 12A-12D, thrust reversers 14A-14D, fuselage 16, wings 18A-18B, tail 20, intake inlets 22A-22B, exhaust outlets 24A-24B, and landing gear 26.

The structural airframe of internal propulsion aircraft 10 is comprised of three main sections: fuselage 16, wings 18A-18B, and tail 20. More specifically, wings 18A-18B and tail 20 are connected to and extend from the sides and rear of fuselage 16, respectively. Landing gear 26 also protrudes from the bottom of fuselage 16 when aircraft 10 is on the ground but is stowed within fuselage 16 when aircraft 10 is in flight. The shape of aircraft 10 and the materials it is constructed from result in a low-observable aircraft 10 having a small radar return signal. This quality is due in part to the location of propulsion systems 12A-12D.

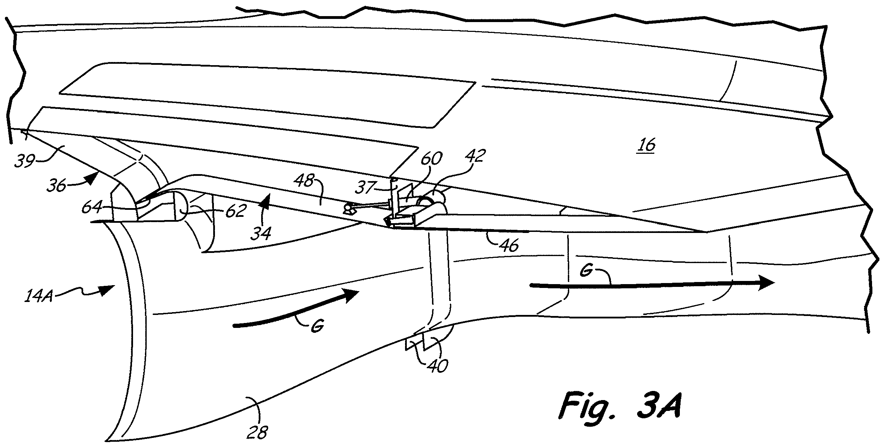

Propulsion systems 12A-12D are located within the airframe of aircraft 10. In the illustrated embodiment, propulsion systems 12A-12D are located within fuselage 16. Typically during operation, propulsion systems 12A-12B take in air A through intake inlet 22A and expel exhaust gas G rearward through exhaust outlet 24A. Similarly, propulsion systems 12C-12D typically take in air A through intake inlet 22B and expel exhaust gas G rearward through exhaust outlet 24B. During typical operation of propulsion systems 12A-12D, such as during flight, thrust reversers 14A-14D are in the stowed position (as shown in FIG. 3A). When thrust reversers 14A-14D are in the deployed position (as shown in FIG. 1A), substantially all of exhaust gas G is exhausted upward and forward through thrust reversers 14A-14D.

The components and configuration of thrust reversers 14A-14D as shown in FIG. 1A allow for exhaust gas G to be redirected to leave propulsion systems 12A-12D, respectively, traveling in a forward and upward direction. This exerts reactionary downward and rearward forces on aircraft 10, which assists aircraft 10 to stop during landing (by both providing reverse thrust and increasing braking force from landing gear 26). It also provides sufficient reverse thrust to propel aircraft 10 rearward when it is on the ground. Thereby, aircraft 10 can taxi backwards under its own power.

Depicted in FIG. 1A is one embodiment of the present invention, to which there are alternative embodiments. For example, one or more of propulsion systems 14A-14D can be located within wings 18A-18B. For another example, aircraft 10 can have more less than or more than four propulsion systems 14.

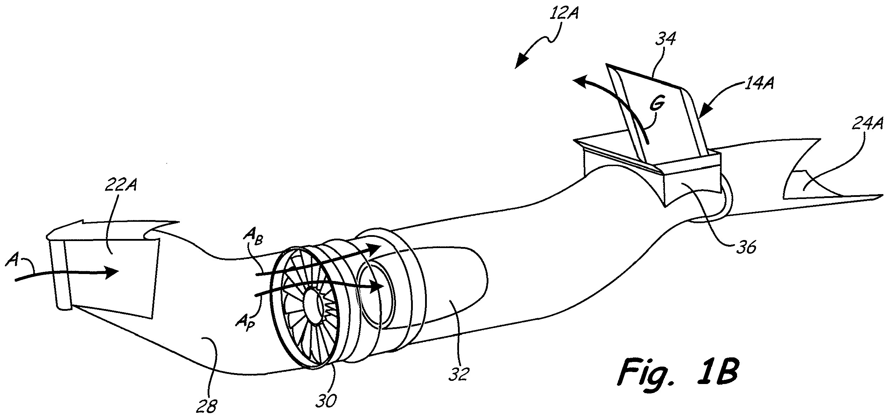

In FIG. 1B, a front perspective view of propulsion system 12A broken out of internal propulsion aircraft 10 along line 1B in FIG. 1A is shown, with propulsion system 12A having thrust reverser 14A in the deployed position. Shown in FIG. 1B are propulsion system 12A, thrust reverser 14A, intake inlet 22A, exhaust outlet 24A, propulsion system duct 28, fan 30, gas turbine engine 32, kicker blocker 34, box 36, air A, bypass air A_{B}, primary air A_{P}, and exhaust gas G. While propulsion systems 12A-12D may not be identical, for the present purposes propulsion system 12A is representative of propulsion systems 12A-12D.

Propulsion system 12A is situated in propulsion system duct 28, with intake inlet 22A at the front of duct 28 and exhaust outlet 24A at the rear of duct 28. Behind intake inlet 22A is fan 30. Fan 30 is connected to gas turbine engine 32, which is also situated in duct 28. Between gas turbine engine 32 and exhaust outlet 24A is thrust reverser 14A.

Thrust reverser 14A includes kicker blocker 34 and box 36. In the illustrated embodiment, thrust reverser 14A is in the deployed position. Therefore, kicker blocker 34 is positioned partially in duct 28 and box 36, and partially out of duct 28 and box 36. When propulsion system 14A is installed in aircraft 10 (shown in FIG. 1A), box 36 extends between duct 28 and fuselage 16 (shown in FIG. 1A).

During operation of propulsion system 12A, with thrust reverser 14A being deployed, air A enters intake inlet 22A. Air A is then divided into bypass air A_{B} and primary air A_{P}. Primary air A_{P} enters gas turbine engine 32 where it is used in a combustion process to accelerate primary air A_{P} rearward and provide rotational force. The rotational force is used to turn fan 30. Fan 30 accelerates bypass air A_{B} rearward. After gas turbine engine 32, primary air A_{P} and bypass air A_{B} combine to form exhaust gas G. Exhaust gas G has a significant amount of momentum and produces thrust when exhausted to the atmosphere. Because thrust reverser 14A is deployed, exhaust gas G exits propulsion system 12A at an upward and forward angle.

The components and configuration of propulsion system 12A as shown in FIG. 1B allow for thrust to be generated to power aircraft 10 while concealing fan 30 and gas turbine engine 32 from radar detection. In addition, thrust reverser 14A allows for both primary air A_{P} and bypass air A_{B} to be redirected forward and upward, which generates a reactionary force in the downward and rearward directions on aircraft 10 (shown in FIG. 1).

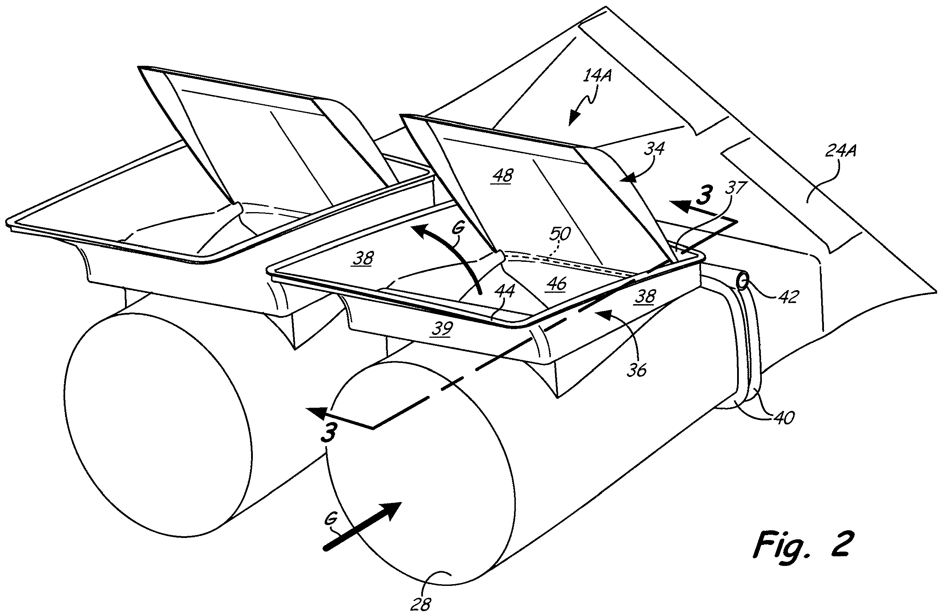

In FIG. 2, a front perspective view of two thrust reversers 14 in the deployed position is shown. Shown in FIG. 2 are thrust reverser 14A, exhaust outlet 24A, propulsion system duct 28, kicker blocker 34, box 36, rear box side 37, lateral box sides 38, box ramp 39, support rails 40, hinge 42, box seal 44, blocker portion 46, kicker portion 48, portion division 50, and exhaust gas G. While thrust reversers 14A-14D may not be identical, for the present purposes thrust reverser 14A is representative of thrust reversers 14A-14D.

Support rails 40 surround propulsion system duct 28 and are connected to fuselage 16 (shown in FIG. 1A). Attached to support rails 40 is hinge 42. Support rails 40 provide an interface between hinge 42 and fuselage 16 that is capable of transmitting force from hinge 42 to fuselage 16.

In the illustrated embodiment, box 36 has four sides, with the rear box side 37 being attached to hinge 42. Extending forward from the opposite ends of rear box side 37 are lateral box sides 38. Extending between lateral box sides 38 and spaced apart from rear box side 37 is box ramp 39. Along the bottom edge of box 36, box 36 is attached to duct 28 around an aperture in duct 28. Along the top edge of box 36 is box seal 44, wherein box seal 44 is a finger seal that has two substantially flat portions, with one of the surfaces being connected to box 36, and a third portion that extends between an edge of each of the flat portions (to generally form a "C" shape). Box seal 44 contacts fuselage 16 to prevent leakage of exhaust gas G between propulsion system duct 28 and fuselage 16.

Kicker blocker 34 is a single component that can be divided into two sections that have a junction along portion division 50 with the lower section being blocker portion 46 and the upper section being kicker portion 48. Kicker blocker 34 is rotatably connected to hinge 42 at portion division 50. When thrust reverser 14A is in the deployed position (as shown in FIG. 2), blocker portion 46 extends into duct 28 substantially across the entire width and the entire height of duct 28. Also when deployed, kicker portion 48 is positioned partially in box 36 and extends past box seal 44. Thereby, kicker portion 48 extends beyond fuselage 16 (shown in FIG. 1A).

During operation of propulsion system 12A with thrust reverser 14A in the deployed position, exhaust gas G that is traveling through duct 28 encounters blocker portion 46 of kicker blocker 34 prior to exiting propulsion system 12A through exhaust outlet 24A. Kicker blocker 34 then redirects exhaust gas G upwards and forwards through box 36. At the outermost end of kicker blocker 34, kicker portion 48 is curved farther forward than the rest of kicker portion 48 along substantially the entire width of kicker portion 48. The compound shape of kicker portion 48 directs exhaust gas G in a more forward direction than if kicker portion 48 were straight, and kicker portion 48 does so after gas has exited box 36.

Because exhaust gas G is being exhausted from fan 30 and gas turbine engine 32 (both shown in FIG. 1B), exhaust gas G is traveling at high velocity. When exhaust gas G is redirected by kicker blocker 34, exhaust gas G exerts a substantial amount of force on kicker blocker 34. This force is transmitted through hinge 42, to support rails 40, and is dissipated in fuselage 16 (shown in FIG. 1A).

Because exhaust gas G includes primary air A_{P} (shown in FIG. 1B), exhaust gas G has a high temperature. Because kicker blocker 34 is exposed to hot exhaust gas G, kicker blocker 34 is comprised of material that is able to withstand such heat and still retain its strength. In addition, the material is corrosion resistant. Such material includes, but is not limited to, 600 alloy steel, 625 alloy steel, 718 alloy steel, titanium, stainless steel, and ceramic matrix composite. Furthermore, kicker blocker 34 can have a thermal barrier coating to further prevent failure due to exposure to hot exhaust gas G. This thermal barrier coating may be applied to kicker blocker 34, or to only a section of kicker blocker 34, such as blocker portion 46.

The components and configuration of thrust reverser 14 as shown in FIG. 2 allow for exhaust gas G to be used to produce reverse thrust for aircraft 10. More specifically, this occurs without placing undue stress on duct 28 or box 36 and without deforming or destroying kicker blocker 34. That is due in part to the fact that the reactionary force on thrust reverser 14 is transmitted through hinge 42 and support rails 40 and is dissipated throughout fuselage 16 (shown in FIG. 1A).

In FIG. 3A, a cross-section view along line 3-3 in FIG. 2 of thrust reverser 14A in the stowed position is shown. Shown in FIG. 3A are thrust reverser 14A, fuselage 16, propulsion system duct 28, kicker blocker 34, box 36, box ramp 39, support rails 40, hinge 42, blocker portion 46, kicker portion 48, actuator 60, transition feature 62, kicker seal 64, and exhaust gas G. As stated previously, while thrust reversers 14A-14D may not be identical, for the present purposes thrust reverser 14A is representative of thrust reversers 14A-14D.

The components and connections of thrust reverser 14A are as described previously in FIGS. 1A-2, with additional detail presently shown. For example, actuator 60 is rotatably attached to kicker blocker 34 at one end and extends through an aperture in rear box side 37. Actuator 60 is rotatably attached to kicker blocker 34 at the opposite end. In the illustrated embodiment actuator 60 is a linear actuator of the double-acting pneumatic cylinder type that pushes on kicker blocker 34 to put thrust reverser 14A in the stowed position. Conversely, actuator 60 pulls kicker blocker 34 to put thrust reverser 14A in the deployed position. In addition, actuator 60 is offset from the center of hinge 42 such that actuator 60 has leverage with which to act on kicker blocker 34. The reactionary load from actuator 60 exerting force on kicker blocker 34 is transmitted to hinge 42, which is connected to fuselage 16 through support rails 40.

Near box ramp 39, duct 28 has transition feature 62. Duct 28 also has kicker seal 64 that is attached to transition feature 62. Kicker seal 64 is comprised of a flexible metal such as, but not limited to, 718 nickel steel or titanium. When in the stowed position, kicker portion 48 covers the aperture in duct 28 and rests on kicker seal 64. Kicker seal 64 contacts kicker portion 48 along substantially the entire width of kicker portion 48 and substantially prevents leakage from duct 28 into box 36 along that edge. In addition, blocker portion 46 is positioned substantially alongside duct 28 within duct 28. Thereby, blocker portion 46 does not substantially obstruct duct 28 when in the stowed position

The components and configuration of thrust reverser 14A as shown in FIG. 3A allow for thrust reverser 14A to be moved between the stowed position and the deployed position. In addition, when thrust reverser 14A is stowed, exhaust gas G is allowed to travel through duct 28 in a generally rearward direction without being substantially impeded by blocker portion 46 and without substantially leaking into duct 28.

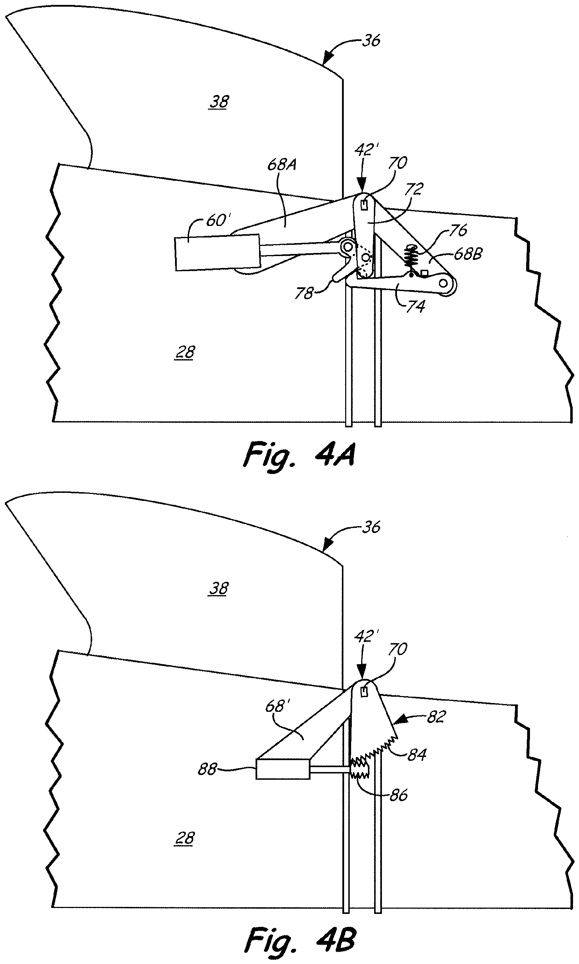

Depicted in FIG. 3A is one embodiment of the present invention, to which there are alternative embodiments. For example, actuator 60 can be one of many types of actuators. More specifically, actuator 60 can be, but is not limited to, an oil hydraulic cylinder, a fuel hydraulic cylinder, an electro-mechanical actuator, a cable actuator, and a rotary driver actuator having a worm gear (shown in FIG. 4B). For another example, kicker blocker 34 can be offset from hinge 42 to provide leverage for actuator 60.

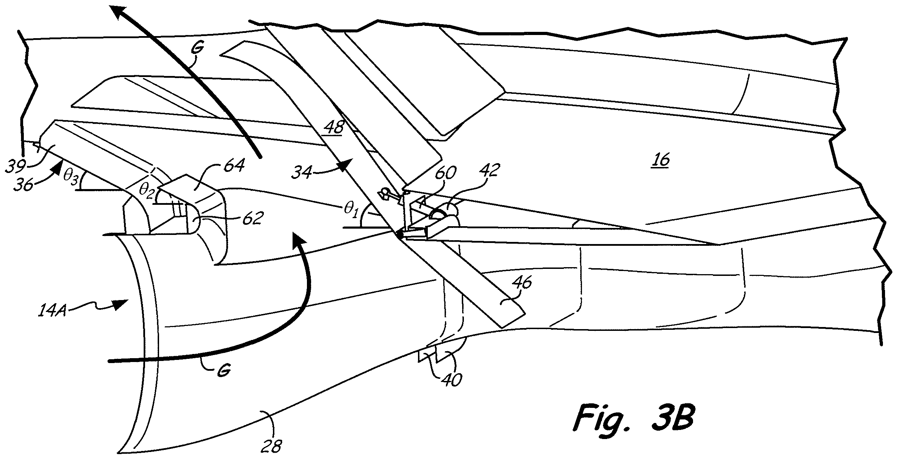

In FIG. 3B, a cross-section view along line 3-3 in FIG. 2 of thrust reverser 14 in the deployed position is shown. Shown in FIG. 3B are thrust reverser 14A, fuselage 16, propulsion system duct 28, kicker blocker 34, box 36, box ramp 39, support rails 40, hinge 42, blocker portion 46, kicker portion 48, actuator 60, transition feature 62, kicker seal 64, exhaust gas G, angle θ₁, angle θ₂, and angle θ₃. As stated previously, while thrust reversers 14A-14D may not be identical, for the present purposes thrust reverser 14A is representative of thrust reversers 14A-14D.

The components and connections of thrust reverser 14A are as described previously in FIGS. 1A-3A, with additional detail presently shown. For example, when kicker blocker 34 is fully deployed, the straight section of kicker portion 48 adjacent to portion division 50 (shown in FIG. 2) is at angle θ₁. Preferably, angle θ₁ is at least thirty degrees and is not more than sixty degrees from horizontal (when aircraft 10, shown in FIG. 1A, is on the ground). More preferably, angle θ₁ is at least forty degrees and is not more than fifty degrees from horizontal. Thrust reverser 14A can also be partially deployed wherein the angle of rotation of kicker blocker 34 is less than angle θ₁. In such a situation, some of exhaust gas G passes through duct 28 and the rest of exhaust gas G is redirected through box 36.

As stated previously, when thrust reverser 14A is fully deployed, blocker portion 46 extends into duct 28 substantially across the entire width and the entire height of duct 28. In the fully deployed position, blocker portion 46 blocks at least seventy percent of the thrust generated by propulsion system 12A (shown in FIG. 1B), with thirty percent leakage past kicker blocker 34. Preferably, blocker portion 46 blocks at least ninety percent of the thrust, with ten percent leakage past kicker blocker 34.

In order to prevent stalling of propulsion system 12A, the amount of area available for exhaust gas G to flow through that is created by the deployment of kicker portion 48 is at least as large as the amount of area eliminated by blocker portion 46. Preferably, the amount of area created is greater than the amount of area eliminated.

As stated previously, near box ramp 39, duct 28 has transition feature 62. Because box ramp 39 is at an acute angle to duct 28, transition feature 62 has a curved radial face. In addition, because the aperture in duct 28 is rectilinear, transition feature 62 curves circumferentially with duct 28. Thereby, transition feature 62 smoothes the transition that exhaust gas G must make between traveling generally rearward through duct 28 and traveling generally forward and upward through box 36.

To assist with directing exhaust gas G forwards and upwards, box ramp 39 is positioned at angle θ₃. Preferably, angle θ₃ is at least thirty degrees and is not more than sixty degrees from horizontal (when aircraft 10, shown in FIG. 1A, is on the ground). More preferably, angle θ₃ is at least forty degrees and is not more than fifty degrees from horizontal. While the angle θ₃ is can be the same as angle θ₁, angle θ₃ is can be different from angle θ₁.

To create a smoother transition between transition feature 62 and box ramp 39, kicker seal 64 can rotate to form a complimentary angle with that of box ramp 39. This occurs once kicker portion 48 is rotated off of kicker seal 64. When kicker portion 48 is rotated a sufficient amount, kicker seal 64 will rotate to its natural resting angle which is angle θ₂. Preferably, angle θ₂ is at least thirty degrees and is not more than sixty degrees from horizontal (when aircraft 10, shown in FIG. 1A, is on the ground). More preferably, angle θ₂ is at least forty degrees and is not more than fifty degrees from horizontal. While the angle θ₂ is can be the same as angle θ₁ or angle θ₃, angle θ₂ is can be different from angle θ₁ or angle θ₃.

The components and configuration of thrust reverser 14A as shown in FIG. 3B allow for an adjustable amount of rearward and downward thrust to be generated for aircraft 10 (shown in FIG. 1A). This redirection of thrust is accomplished without adversely affecting the operation of propulsion system 12A (shown in FIG. 2). In addition, due to the features of the interface between duct 28 and box 36 (such as transition feature 62, kicker seal 64, and box ramp 39), exhaust gas G is redirected without unnecessary impedances.

Depicted in FIG. 3B is one embodiment of the present invention, to which there are alternative embodiments. For example, blocker portion 46 can have a seal to decrease leakage around kicker blocker 34 when thrust reverser 14A is deployed.

In FIG. 4A, a side view of alternate embodiment actuator 60' having lock lever 74 is shown. Shown in FIG. 4A are propulsion system duct 28, box 36, lateral box side 38, hinge 42', brackets 68A-68B, hinge shaft 70, lever arm 72, lock lever 74, lock spring 76, and unlock cam 78.

In the illustrated embodiment, alternate embodiment hinge 42 has rotatable hinge shaft 70. Alternate embodiment actuator 60' is rotatably connected to bracket 69A which is connected to hinge 42'. Actuator 60' is a linear actuator of the double-acting pneumatic cylinder type that is located outside of box 36, adjacent to lateral box side 38. Actuator 60' is also rotatably attached to unlock cam 78. Unlock cam 78 is also rotatably attached to lever arm 72. Lever arm 72 has a square aperture that interfaces with a square feature on the end of hinge shaft 70, which attaches lever arm 72 to hinge 42. Kicker blocker 34 (shown in FIG. 1B) is also attached to hinge shaft 70 such that lever arm 72 and kicker blocker 34 rotate together.

Lock lever 74 is rotatably connected to bracket 69B which is connected to hinge 42'. Lock spring 76 is connected to bracket 69B at one end and to lock lever 74 at the other end. Lock spring 76 exerts force that pulls lock lever towards the free end of lever arm 72.

In the illustrated embodiment, thrust reverser 14A (shown in FIG. 3A) is in the stowed position. To deploy thrust reverser 14A, actuator 60' pulls on unlock cam 78. As a result, unlock cam 78 rotates towards lock lever 74, which forces lock lever 74 away from the free end of lever arm 72. Once lock lever 74 has moved a sufficient amount, lock lever 74 will be unlocked and will no longer be preventing lever arm 72 from rotating. Then lever arm 72 will be rotated by actuator 60', which also rotates hinge shaft 70, deploying thrust reverser 14A. The angle of rotation that lever arm 72 travels through to get to the fully deployed position is the same as angle θ₁ (shown in FIG. 3B) because there is no gearing between lever arm 72, hinge shaft 70, and kicker blocker 34 (shown in FIG. 1B).

To return thrust reverser 14A to the stowed position, actuator 60' pushes on lever arm 72. Once lever arm 72 has rotated a sufficient amount, the free end of lever arm 72 will slide past lock lever 74 as lock lever 74 is pushed outward from lever arm 72. Once the free end of lever arm 72 has rotated a sufficient amount, lock lever 74 will snap back toward lever arm 72. This captures and locks lever arm 72 such that it cannot rotate in the deploy direction without the assistance of actuator 60' and unlock cam 78.

The components and configuration of alternate embodiment actuator 60' and lock 68 as shown in FIG. 4A allow for thrust reverser 14A to be moved between the stowed position and the deployed position. In addition, thrust reverser 14A is automatically locked when in the stowed position such that thrust reverser 14A cannot inadvertently move to the deployed position.

Depicted in FIG. 4A is one embodiment of the present invention, to which there are alternative embodiments. For example, actuator 60' can be another type of linear actuator, such as an oil hydraulic cylinder, a fuel hydraulic cylinder, an electro-mechanical actuator, or a cable actuator. For another example, there can be another actuator 60' on the opposite side of box 36 (not shown) such that the two actuators 60' work together to deploy thrust reverser 14A. In such an embodiment, there may be a locking mechanism on one side (as shown) or both sides.

In FIG. 4B, a side view of rotary actuator 88 having worm gear 86 is shown. Shown in FIG. 4B are propulsion system duct 28, box 36, lateral box side 38, hinge 42', bracket 68', hinge shaft 70, pinion arm 82, pinion teeth 84, worm gear 86, and rotary actuator 88.

In the illustrated embodiment, alternate embodiment hinge 42 has rotatable hinge shaft 70. Rotary actuator 88 is connected to bracket 68' which is connected to hinge 42'. Rotary actuator 88 is a pneumatic rotary motor that is located outside of box 36, adjacent to lateral box side 38. Worm gear 86 is attached to rotary actuator 88, and worm gear interfaces with pinion teeth 84 of pinion arm 82. Pinion arm 82 has a square aperture that interfaces with a square feature on the end of hinge shaft 70, which attaches pinion arm 82 to hinge 42. Kicker blocker 34 (shown in FIG. 1B) is also attached to hinge shaft 70 such that pinion arm 82 and kicker blocker 34 rotate together.

In the illustrated embodiment, thrust reverser 14A (shown in FIG. 3A) is in the stowed position. To deploy thrust reverser 14A, rotary actuator 88 rotates worm gear 86 in a first direction. As worm gear 86 turns, worm gear 86 exerts force on pinion teeth 84 which rotates pinion arm 82 and hinge shaft 70 in a second direction that is perpendicular to the first direction. This deploys thrust reverser 14A. The angle of rotation that pinion arm 82 travels through to get to the fully deployed position is the same as angle θ₁ (shown in FIG. 3B) because there is no gearing between pinion arm 82, hinge shaft 70, and kicker blocker 34 (shown in FIG. 1B).

To stow thrust reverser 14A, rotary actuator 88 rotates worm gear 86 in a second direction that is opposite to the first direction. Because worm gear 86 meshes with pinion teeth 84, pinion teeth 84 cannot slide past worm gear 86. Thereby, worm gear 86 controls the rotational position of pinion arm 82 at all times.

The components and configuration of rotary actuator 88 as shown in FIG. 4B allow for thrust reverser 14A to be moved between the stowed position and the deployed position. In addition, worm gear 86 prevents thrust reverser 14A from inadvertently moving regardless of the position thrust reverser 14A is in.

Depicted in FIG. 4B is one embodiment of the present invention, to which there are alternative embodiments. For example, rotary actuator 88 can be a different type of rotary actuator, such as a hydraulic actuator or an electric motor. For another example, there can be another rotary actuator 88 on the opposite side of box 36 (not shown) such that the two rotary actuators 88 work together to deploy thrust reverser 14A.

It should be recognized that the present invention provides numerous benefits and advantages. For example, aircraft 10 can slow itself during landing and can taxi backwards under its own power. Furthermore, these capabilities exist without sacrificing the stealth properties of aircraft 10. For another example, kicker blocker 10 is a single component. For a further example, thrust reversers 14A-14D redirect exhaust gas G with minimal impedance and leakage. For yet another example, the forces from each thrust reverser 14A-14D is transferred to a hinge 42 so that the forces can be dissipated in fuselage 16.

While the invention has been described with reference to exemplary embodiments, it will be understood by those skilled in the art that various changes may be made and equivalents may be substituted for elements thereof without departing from the scope of the invention, which is defined by the appended claims. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A thrust reverser assembly for a gas turbine engine, the thrust reverser comprising:
a hinge (42) with a centre;
a propulsion system duct (28) through which bypass air and gas path air travel, the propulsion system duct having an intake inlet (22A) and an exhaust outlet (24A);
a kicker blocker (34) that is a single component, the kicker blocker having a kicker portion (48) and a blocker portion (46), the kicker blocker being rotatably attached to the hinge and rotatable about the centre of the hinge, the kicker blocker being movable between a stowed position and a deployed position;
wherein the blocker portion is configured to extend into the propulsion system duct when the kicker blocker is in the deployed position to block bypass air and gas path air traveling through the propulsion system duct in a first direction prior to the exhaust outlet, thereby redirecting the bypass air and the gas path air in a second direction; and
wherein the kicker portion (48) is configured to extend out of the propulsion system duct (28) when the kicker blocker (34) is in the deployed position.

2. The thrust reverser assembly of claim 1, wherein an angle of rotation of the kicker blocker between the deployed position and a horizontal line that is substantially parallel to a top side of the propulsion sytem duct is more than thirty degrees and less than sixty degrees such that the kicker portion of the kicker blocker is rotated upwards.

3. The thrust reverser assembly of claim 1 or 2, wherein the kicker blocker includes a thermal barrier coating.

4. The thrust reverser assembly of claim 1, 2 or 3, and further comprising:
a box (36) comprising:
a first side (37) positioned along the length of the hinge;
a second side (3 8) extending forward from a first end of the first side;
a third side (38) extending forward from the second end of the first side; and
a fourth side (39) extending between the second and third sides that is offset from the first side, wherein the fourth side is a ramp that is positioned at an angle more than thirty degrees and less than sixty degrees upwards from a horizontal line that is substantially parallel to a top side of the propulsion system duct.

5. The thrust reverser assembly of claim 4 wherein the box is connected to the propulsion system duct; and preferably further comprising a transition feature (62) of the propulsion system duct that is substantially curved where the box connects to the propulsion system duct.

6. The thrust reverser assembly of claim 4 or 5, wherein the box includes a kicker seal (64) that contacts the kicker portion when the thrust reverser is in the stowed position.

7. The thrust reverser assembly of claim 6, wherein a movable portion of the kicker seal moves to substantially the same angle as the fourth side of the box.

8. The thrust reverser assembly of any preceding claim, and further comprising:
a locking mechanism (74, 76, 78) that must be unlocked in order to rotate the kicker blocker from the stowed position to the deployed position.

9. The thrust reverser assembly of any preceding claim, wherein the kicker blocker is attached to the hinge at a junction of the kicker portion and the blocker portion.

10. The thrust reverser assembly of any preceding claim, wherein the blocker portion and the kicker portion are portions of a unitary kicker blocker.

11. The thrust reverser assembly of any preceding claim, wherein a portion of the kicker portion is curved substantially across a width of the kicker portion.

12. The thrust reverser assembly of any preceding claim, and further comprising:
an actuator (60) that is connected to the hinge and that exerts force on the kicker blocker to rotate the kicker blocker on the hinge, wherein the actuator is selected of a type from the group consisting of an electro-mechanical actuator, a hydraulic actuator, a pneumatic actuator, a cable, and a worm gear.

13. The thrust reverser assembly of any preceding claim, wherein the blocker portion extends across substantially an entire width and an entire height of the propulsion system duct when the thrust reverser is deployed.

14. An internal propulsion aircraft including a thrust reverser (14), the aircraft comprising:
a fuselage (16);
a wing (18) extending from the fuselage;
an internal propulsion system (10) positioned within a propulsion system duct in one of the fuselage or the wing, the propulsion system comprising:
an intake inlet;
a fan;
a gas turbine engine;
an exhaust outlet; and
a thrust reverser assembly (14) according to any preceding claim positioned between the gas turbine engine (32) and the exhaust outlet (24) of the propulsion system, the thrust reverser being movable between a stowed position and a deployed position, wherein the thrust reverser blocks the propulsion system duct when in the deployed position; and
wherein the hinge is connected to the fuselage.

15. The aircraft of claim 14 when dependent on any claim which depends from claim 4, wherein the box extends between the propulsion system duct and the fuselage;
and preferably further comprising:
a box seal (44) positioned between the box and the fuselage.

## Patentansprüche

1. Schubumkehreranordnung für ein Gasturbinentriebwerk, wobei der Schubumkehrer umfasst:
ein Scharnier (42) mit einem Mittelpunkt;
einen Antriebssystemkanal (28), durch welchen Bypass-Luft und Gaswegluft
laufen, wobei der Antriebssystemkanal einen Aufnahmeeinlass (22A) und einen Abführungsauslass (24A) aufweist;
einen Ablenkblockierer (34), der eine Einzelkomponente ist, wobei der Ablenkblockierer einen Ablenkabschnitt (48) und einen Blockierabschnitt (46) aufweist, wobei der Ablenkblockierer drehbar an das Scharnier befestigt und um den Mittelpunkt des Scharniers drehbar ist, wobei der Ablenkblockierer zwischen einer verstauten Position und einer entfalteten Position bewegbar ist;
wobei der Blockierabschnitt konfiguriert ist, um sich in den Antriebssystemkanal zu erstrecken, wenn der Ablenkblockierer in der entfalteten Position ist, um Bypass-Luft und Gaswegluft, die durch den Antriebssystemkanal läuft, in einer ersten Richtung zu dem Abführungsauslass zu blockieren, wodurch die Bypass-Luft und die Gaswegluft in eine zweite Richtung gelenkt werden; und
wobei der Ablenkabschnitt (48) konfiguriert ist, um sich aus dem Antriebssystemkanal (28) zu erstrecken, wenn der Ablenkblockierer (34) in der entfalteten Position ist.

2. Schubumkehreranordnung nach Anspruch 1, wobei ein Drehwinkel des Ablenkblockierers zwischen der entfalteten Position und einer horizontalen Linie, die im Wesentlichen parallel zu einer Oberseite des Antriebssystemkanals ist, mehr als dreißig Grad und weniger als sechzig Grad beträgt, sodass der Ablenkabschnitt des Ablenkblockierers nach oben gedreht ist.

3. Schubumkehreranordnung nach Anspruch 1 oder 2, wobei der Ablenkblockierer eine Wärmedämmschicht beinhaltet.

4. Schubumkehreranordnung nach Anspruch 1, 2 oder 3 und ferner umfassend:
ein Gehäuse (36), umfassend:
eine erste Seite (37), die entlang der Länge des Scharniers positioniert ist;
eine zweite Seite (38), die sich nach vorne von einem ersten Ende der ersten Seite erstreckt;
eine dritte Seite (38), die sich nach vorne von dem zweiten Ende der ersten Seite erstreckt; und
eine vierte Seite (39), die sich zwischen der zweiten und dritten Seite erstreckt, die von der ersten Seite versetzt ist, wobei die vierte Seite eine Rampe ist, die zu einem Winkel von mehr als dreißig Grad und weniger als sechzig Grad nach oben von einer horizontalen Linie positioniert ist, die im Wesentlichen parallel zu einer Oberseite des Antriebssystemkanals ist.

5. Schubumkehreranordnung nach Anspruch 4, wobei das Gehäuse mit dem Antriebssystemkanal verbunden ist; und bevorzugt ferner umfassend ein Übergangsmerkmal (62) des Antriebsystemkanals, das im Wesentlichen dort gebogen ist, wo das Gehäuse mit dem Antriebssystemkanal verbunden ist.

6. Schubumkehreranordnung nach Anspruch 4 oder 5, wobei das Gehäuse eine Ablenkdichtung (64) beinhaltet, die den Ablenkabschnitt kontaktiert, wenn der Schubumkehrer in der verstauten Position ist.

7. Schubumkehreranordnung nach Anspruch 6, wobei sich ein beweglicher Abschnitt der Ablenkdichtung im Wesentlichen zu demselben Winkel wie die vierte Seite des Gehäuses bewegt.

8. Schubumkehreranordnung nach einem vorhergehenden Anspruch und ferner umfassend:
einen Verriegelungsmechanismus (74, 76, 78), der entriegelt werden muss, um den Ablenkblockierer von der verstauten Position in die entfaltete Position zu drehen.

9. Schubumkehreranordnung nach einem vorhergehenden Anspruch, wobei der Ablenkblockierer an einer Verbindungsstelle des Ablenkabschnitts und des Blockierabschnitts an das Scharnier befestigt ist.

10. Schubumkehreranordnung nach einem vorhergehenden Anspruch, wobei der Blockierabschnitt und der Ablenkabschnitt Abschnitte eines einheitlichen Ablenkblockierers sind.

11. Schubumkehreranordnung nach einem vorhergehenden Anspruch, wobei ein Abschnitt des Ablenkabschnitts im Wesentlich über eine Breite des Ablenkabschnitts gebogen ist.

12. Schubumkehreranordnung nach einem vorhergehenden Anspruch und ferner umfassend:
einen Aktor (60), der mit dem Scharnier verbunden ist und Kraft auf den Ablenkblockierer ausübt, um den Ablenkblockierer auf dem Scharnier zu drehen, wobei der Aktor ausgewählt ist aus einer Art aus der Gruppe bestehend aus einem elektromechanischen Aktor, einem hydraulischen Aktor, einem pneumatischen Aktor, einem Kabel und einem Schneckenrad.

13. Schubumkehreranordnung nach einem vorhergehenden Anspruch, wobei sich der Blockierabschnitt im Wesentlichen über eine gesamte Breite und eine gesamte Höhe des Antriebssystemkanals erstreckt, wenn der Schubumkehrer entfaltet ist.

14. Schubtriebwerkflugzeug einschließlich eines Schubumkehrers (14), wobei das Flugzeug umfasst:
einen Flugzeugrumpf (16);
einen Flügel (18), der sich von dem Flugzeugrumpf erstreckt;
ein Schubtriebwerksystem (10), das innerhalb eines Antriebssystemkanals in einem von dem Flugzeugrumpf oder dem Flügel positioniert ist, wobei das Antriebssystem umfasst:
einen Aufnahmeeinlass;
ein Gebläse;
ein Gasturbinentriebwerk;
einen Abführungsauslass; und
eine Schubumkehreranordnung (14) nach einem der vorhergehenden Ansprüche, die zwischen dem Gasturbinentriebwerk (32) und dem Abführungsauslass (24) des Antriebssystems angeordnet ist, wobei der Schubumkehrer zwischen einer verstauten Position und einer entfalteten Position bewegbar ist, wobei der Schubumkehrer den Antriebssystemkanal blockiert, wenn er in der entfalteten Position ist; und
wobei das Scharnier mit dem Flugzeugrumpf verbunden ist.

15. Flugzeug nach Anspruch 14, wenn von einem Anspruch abhängend, der von Anspruch 4 abhängt, wobei sich das Gehäuse zwischen dem Antriebssystemkanal und dem Flugzeugrumpf erstreckt;
und bevorzugt weiter umfassend:
eine Gehäusedichtung (44), die zwischen dem Gehäuse und dem Flugzeugrumpf positioniert ist.

## Revendications

1. Ensemble inverseur de poussée pour un moteur à turbine à gaz, l'inverseur de poussée comprenant :
une charnière (42) avec un centre
un conduit de système de propulsion (28) à travers lequel de l'air de dilution et de l'air de trajet de gaz circulent, le conduit de système de propulsion ayant une entrée d'admission (22A) et une sortie d'échappement (24A) ;
un éjecteur bloqueur (34) qui est un composant unique, l'éjecteur bloqueur ayant une partie d'éjecteur (48) et une partie de bloqueur (46), l'éjecteur bloqueur étant fixé de manière rotative à la charnière et pouvant tourner autour du centre de la charnière, l'éjecteur bloqueur pouvant se déplacer entre une position rempliée et une position déployée ;
dans lequel la partie de bloqueur est conçue pour s'étendre dans le conduit de système de propulsion lorsque l'éjecteur bloqueur est en position déployée pour bloquer l'air de dilution et l'air de trajet de gaz circulant à travers le conduit de système de propulsion dans une première direction avant la sortie d'échappement, en redirigeant ainsi l'air de dilution et l'air de trajet de gaz dans une seconde direction ; et
dans lequel la partie d'éjecteur (48) est conçue pour s'étendre hors du conduit de système de propulsion (28) lorsque l'éjecteur bloqueur (34) est dans la position déployée.

2. Ensemble inverseur de poussée selon la revendication 1, dans lequel un angle de rotation de l'éjecteur bloqueur entre la position déployée et une ligne horizontale qui est sensiblement parallèle à un côté supérieur du conduit de système de propulsion est supérieur à trente degrés et inférieur à soixante degrés de telle sorte que la partie d'éjecteur de l'éjecteur bloqueur est tournée vers le haut.

3. Ensemble inverseur de poussée selon la revendication 1 ou 2, dans lequel l'éjecteur bloqueur comprend un revêtement d'isolation thermique.

4. Ensemble inverseur de poussée selon la revendication 1, 2 ou 3, et comprenant en outre : un caisson (36) comprenant :
un premier côté (37) positionné sur la longueur de la charnière ;
un deuxième côté (38) s'étendant en avant depuis une première extrémité du premier côté ;
un troisième côté (38) s'étendant en avant depuis la seconde extrémité du premier côté ; et
un quatrième côté (39) s'étendant entre les deuxième et troisième côtés qui est décalé par rapport au premier côté, dans lequel le quatrième côté est un plan incliné qui est positionné à un angle de plus de trente degrés et de moins de soixante degrés vers le haut à partir d'une ligne horizontale qui est sensiblement parallèle à un côté supérieur du conduit de système de propulsion.

5. Ensemble inverseur de poussée selon la revendication 4, dans lequel le caisson est relié au conduit de système de propulsion ; et comprenant en outre de préférence une caractéristique de transition (62) du conduit de système de propulsion qui est sensiblement incurvé à l'endroit où le caisson est relié au conduit de système de propulsion.

6. Ensemble inverseur de poussée selon la revendication 4 ou 5, dans lequel le caisson comprend un joint d'éjecteur (64) qui vient en contact avec la partie d'éjecteur lorsque l'inverseur de poussée est dans la position repliée.

7. Ensemble inverseur de poussée selon la revendication 6, dans lequel une partie mobile du joint d'éjecteur se déplace sensiblement jusqu'au même angle que le quatrième côté du caisson.

8. Ensemble inverseur de poussée selon une quelconque revendication précédente, et comprenant en outre :
un mécanisme de verrouillage (74, 76, 78) qui doit être déverrouillé afin de faire tourner l'éjecteur bloqueur de la position repliée à la position déployée.

9. Ensemble inverseur de poussée selon une quelconque revendication précédente, dans lequel l'éjecteur bloqueur est fixé à la charnière au niveau d'une jonction de la partie d'éjecteur et de la partie de bloqueur.

10. Ensemble inverseur de poussée selon une quelconque revendication précédente, dans lequel la partie de bloqueur et la partie d'éjecteur sont des parties d'un éjecteur bloqueur d'un seul tenant.

11. Ensemble inverseur de poussée selon une quelconque revendication précédente, dans lequel une partie de la partie d'éjecteur est incurvée sensiblement sur une largeur de la partie d'éjecteur.

12. Ensemble inverseur de poussée selon une quelconque revendication précédente, et comprenant en outre :
un actionneur (60) qui est relié à la charnière et qui exerce une force sur l'éjecteur bloqueur pour faire tourner l'éjecteur bloqueur sur la charnière, dans lequel l'actionneur est sélectionné d'un type parmi le groupe composé d'un actionneur électromécanique, d'un actionneur hydraulique, d'un actionneur pneumatique, d'un câble et d'un engrenage à vis sans fin.

13. Ensemble inverseur de poussée selon une quelconque revendication précédente, dans lequel la partie de bloqueur s'étend sensiblement sur toute une largeur et toute une hauteur du conduit de système de propulsion lorsque l'inverseur de poussée est déployé.

14. Aéronef à propulsion interne comprenant un inverseur de poussée (14), l'aéronef comprenant :
un fuselage (16) ;
une aile (18) s'étendant à partir du fuselage ;
un système de propulsion interne (10) positionné à l'intérieur d'un conduit de système de propulsion dans l'un du fuselage ou de l'aile, le système de propulsion comprenant :
une entrée d'admission ;
un ventilateur ;
un moteur à turbine à gaz ;
une sortie d'échappement ; et
un ensemble inverseur de poussée (14) selon une quelconque revendication précédente positionné entre le moteur à turbine à gaz (32) et la sortie d'échappement (24) du système de propulsion, l'inverseur de poussée pouvant se déplacer entre une position repliée et une position déployée, dans lequel l'inverseur de poussée bloque le conduit de système de propulsion lorsqu'il est dans la position déployée ; et
dans lequel la charnière est reliée au fuselage.

15. Aéronef selon la revendication 14 dépendant d'une quelconque revendication qui dépend de la revendication 4, dans lequel le caisson s'étend entre le conduit de système de propulsion et le fuselage ; et comprenant en outre de préférence :
un joint de caisson (44) positionné entre le caisson et le fuselage.
